# EUROPÄISCHE PATENTANMELDUNG

(11) **EP 1 276 218 A2**
(43) Veröffentlichungstag der Anmeldung: **15.01.2003**
(21) Anmeldenummer: 02100797.6
(22) Anmeldetag: 10.07.2002
(51) Int. Cl.: H02M 3/337

(54) **Elektrische Schaltungsanordnung**

(30) Priorität: 12.07.2001 DE 10133865
(71) Anmelder: Philips Corporate Intellectual Property GmbH, 20099 Hamburg (DE); Koninklijke Philips Electronics N.V., 5621 BA Eindhoven (NL)
(72) Erfinder: Tolle, Tobias, Weisshausstrasse 2, 52066, Aachen (DE); Duerbaum, Thomas, Weisshausstrasse 2, 52066, Aachen (DE); Smidt, Pieter Jan Mark, Weishausstrasse 2, 52066, Aachen (DE)
(74) Vertreter: Volmer, Georg, Dipl.-Ing.

(57) **Zusammenfassung**

Die vorliegende Erfindung betrifft eine elektrische Schaltungsanordnung zur Erzeugung einer gleichgerichteten Niederspannung kleiner elektrischer Leistung aus einer Wechselspannung, welche aus zwei über einen Zwischenkreis miteinander kombinierten Schaltungsblöcken besteht, von denen der erste Schaltungsblock eine kapazitive Eingangsstufe zur Erzeugung einer spannungsbegrenzten Zwischenkreisspannung enthält und von denen der zweite eine asymmetrische Halbbrücke besitzt, die von der Zwischenkreisspannung gsspeist wird und eine Wechselspannung auf niedrigerem Niveau als die Netzspannung erzeugt, welche über einen nachfolgenden Transformator vom Netz entkoppelt, auf das Niveau der Niederspannung transformiert und anschließend über eine Diode gleichgerichtet wird.

## Beschreibung

Die vorliegende Erfindung betrifft eine elektrische Schaltungsanordnung zur Erzeugung einer gleichgerichteten Niederspannung kleiner elektrischer Leistung aus einer Netzspannung mit Wechselspannung.

Unter kleinen elektrischen Leistungen werden in der vorliegenden Anmeldung Leistungen unter 5 Watt verstanden.

Hierzu werden zumeist Netzteile mit 50 Hertz-Transformatoren eingesetzt. Diese sind groß, schwer und haben einen schlechten Wirkungsgrad Insbesondere verbrauchen sie auch dann viel Energie, wenn Ihre Last abgeschaltet ist.

Alternativ hierzu gibt es Schaltnetzteile. Herkömmliche Schaltnetzteile bestehen lediglich aus einer einzigen Stufe, meist einem Sperrwandler.

Will man derartige Schaltnetzteile mit den in Europa üblichen 230 Volt-Netzspannungen betreiben, so wird ein relativ teurer 600 Volt-Schalttransistor notwendig.

Die hohe Eingangsspannung von 230 Volt führt bei vielen Anwendungen zudem zu hohen Schaltverlusten.

Ferner verlangt die hohe Eingangsspannung nach einem Transformator mit einer hohen Hauptinduktivität. Folglich können nur Transformatoren mit großen Kernquerschnitten und/oder großen Windungszahlen verwendet werden.

Nachteilig an derartigen Sperrwandlern ist auch der starke Anstieg der Ausgangsspannung und der Ausgangsleistung im Falle eines Fehlers in der Regelung.

Um die auf der Niederspannungsseite angeschlossene Last auch dann zu schützen, wenn die Ausgangsspannung fehlerhaft stark ansteigt, muss eine zusätzliche Schutzschaltung eingebaut werden.

Diese Nachteile führen dazu, dass Schaltnetzteile im Leistungsbereich unter 5 Watt teurer in der Herstellung sind als ein 50 Hertz-Transformatornetzteil.

Aus der EP 0 229 950 B1 ist ein transformatorloses Netzgerät bekannt. Dies verfügt über eine kapazitive Eingangsstufe. Derartige kapazitive Eingangsstufen finden sich auch in der US-PS 3,355,650 sowie in der DE 40 37 722 C1.

Derartige kapazitive Eingangsstufen bieten üblicherweise keine Netztrennung und sind daher nicht geeignet zum Betrieb elektrischer Verbraucher, die mit potentialgetrennter Kleinspannung zu betreiben sind.

Ferner ist bei derartigen kapazitiven Eingangsstufen für sehr kleine Ausgangsspannungen ein relativ großer Eingangskondensator notwendig.

Geht man weiterhin davon aus, dass derartige Kleinnetzteile oft tage-, monate- oder jahrelang in Betrieb sind und dabei erhebliche Zeitanteile auch im Leerlaufbetrieb (Stand-By) gehalten werden, so stellt die Summe der heute üblichen Kleinnetzteile einen erheblichen Kostenfaktor im Hinblick auf den Gesamtstromverbrauch dar.

Es ist daher Aufgabe der vorliegenden Erfindung, eine elektrische Schaltungsanordnung zur Erzeugung einer gleichgerichteten Niederspannung kleiner elektrischer Leistung aus einer Netzspannung mit Wechselspannung vorzuschlagen, die eine potentialgetrennte Versorgung von elektrischen Verbrauchern ermöglicht, welche in Haushalt und Industrie mit Niederspannung zu betreiben sind.

Diese Aufgabe löst die Erfindung mit den Merkmalen des Anspruchs 1.

Damit wird ein kostengünstiges Netzteil kleiner Leistung (zum Beispiel 2 Watt) bereitgestellt, welches elektrische Energie aus dem Hausnetz von beispielsweise 230 Volt oder 110 Volt in potentialgetrennte Spannung von zum Beispiel 6 Volt umgeformt.

Maßgeblich für die Erfindung ist die Kombination von zwei Schaltungsblöcken von denen der erste Schaltungsblock eine kapazitive Eingangsstufe darstellt, der eine in Spannung und Strom begrenzte Zwischenkreisspannung erzeugt, welche als Eingangsspannung des zweiten Schaltungsblocks dient.

Der zweite Schaltungsblock beinhaltet zunächst wesentlich eine im Wechseltakt betriebene asymmetrische Transistorhalbbrücke zur Erzeugung einer Wechselspannung von typisch etwa 50 Volt mit Gleichanteil, der typisch um die Hälfte der Zwischenkreisspannung beträgt, wobei die Wechselspannung auf diesem relativ niedrigen Spannungsniveau über eine Paarung von Transformatorwindungen auf die Niederspannung heruntertransformatiert und anschließend gleichgerichtet wird.

Wesentlich für die Erfindung ist die gelungene Integration zwischen einer kapazitiven Eingangsstufe und einer nachfolgenden Halbbrücke mit anschließender Trennung zwischen Ausgangs- und Eingangspotential.

Dabei reduziert die kapazitive Eingangsstufe die Eingangsspannung, richtet sie gleich und beschränkt die Eingangsleistung.

Die so erzeugte Zwischenkreisspannung ist auf einen maximalen Wert begrenzt.

Da der Hochfrequenz-Netztrennungstransformator in dem mit verminderter Spannung betriebenen nachgeordneten zweiten Schaltungsblock angeordnet ist, können leichte Transformatoren geringen Bauvolumens verwendet werden.

Durch die Begrenzung der Zwischenkreisspannung werden auch die maximalen Ausgangswerte limitiert, so dass ein Überspannungsschutz am Ausgang des Netzgeräts, also auf der Niederspannungsseite, eingespart werden kann.

Auf der Sekundärseite ist darüber hinaus lediglich eine Ausgangsdiode notwendig. Trotzdem kann auch ein Zweiweggleichrichter vorgesehen sein.

Weiterhin ist wesentlich für die Erfindung die Ansteuerung der Transistorhalbbrücke im Wechseltakt.

Einer Rückkoppelung von der Ausgangsgröße des Netzteils zu den Wechseltaktgebern bzw. Schalttransistoren bedarf es im Prinzip nicht, da bereits bei einem festen Tastverhältnis der Wechseltaktgeber bzw. Schalttransistoren eine recht gute Ausgangscharakteristik erreicht wird. Dies ist ein Vorteil gegenüber anderen Topologien von Schaltnetzteilen. Das Tastverhältnis p der Halbbrücke oder des Wechseltakts wird hier wie folgt definiert: p = tein/T, wobei tein die Einschaltzeit eines bestimmten und in den Ausführungsbeispielen näher spezifizierten Transistors und T die Dauer eines Schaltzyklus ist. Hierauf wird anhand der Ausführungsbeispiele noch genau eingegangen.

Versuche haben gezeigt, dass die maximal auftretende Spannung typisch nur 20 % über der Nominalspannung und der Maximalstrom typisch nur 60 % über dem Nominalstrom liegt.

Trotzdem ist eine Rückkopplung möglich, falls der Ausgang besser geregelt werden soll.

Weiterhin lässt sich erreichen, dass im Einschaltaugenblick jedes Transistors über ihm im wesentlichen keine Spannung liegt, so dass lediglich ein geringer Aufwand für die EMV-Filterung notwendig wird und zusätzlich die Verlustleistung in den Transistoren deutlich reduziert ist. Dieser Effekt ist zwar nicht zwingend in allen Betriebspunkten gegeben. Abhängig von mehreren Parametern lässt sich dieser Effekt aber für alle interessierenden Arbeitspunkte erzielen.

Durch den Betrieb des zweiten Schaltungsblocks mit der spannungsreduzierten Zwischenkreisspannung ergibt sich der weitere Vorteil, dass alle Halbleiter des zweiten Schaltungsblocks sowie deren Ansteuerungselemente in ein Niederspannungs-IC integrierbar sind.

Hierunter werden integrierte Schaltkreise verstanden, deren Betriebsspannung typischerweise unter 100 Volt liegt. Da zudem auch alle Halbleiter der ersten Stufe keiner höheren Spannung als der Zwischenkreisspannung ausgesetzt sind, können diese ebenfalls in denselben IC integriert werden, oft die Gleichrichterdioden dieser aufgrund ihrer Überstromtragfähigkeit jedoch nicht.

Darüber hinaus ist neben dem ungeregelten Betrieb, der für viele Anwendungen bereits geeignet ist, mit geringem Aufwand auch ein geregelter Betrieb möglich.

Der geregelte Betrieb erfolgt bevorzugt über das Tastverhältnis der Halbbrücke. Das Tastverhältnis der Halbbrücke erlaubt einen festfrequenten Betrieb und somit eine einfache EMV-Filterung. Außerdem lassen sich die Ansteuersignale für die Halbbrückensignale bei festfrequentem Betrieb mit deutlich weniger Aufwand erzeugen als zum Beispiel eine Regelung über die Zwischenkreisspannung. Durch die Regelung über das Tastverhältnis der Halbbrücke lässt sich auch die Übertragung von Schwankungen der Zwischenkreisspannung aufgrund des 50 Hz Eingangssignals und aufgrund der Regelung der Zwischenkreisspannung auf die Ausgangsspannung vermeiden, so dass auftretende Spannungsschwankungen stets ausgeregelt werden können.

Hierauf wird in den Ausführungsbeispielen näher eingegangen.

Im folgenden wird die Erfindung anhand von Ausführungsbeispielen näher erläutert. Die Figuren zeigen:
- Fig.1: ein erstes Ausführungsbeispiel der Erfindung mit ungeregelter Niederspannung,
- Fig.2: ein Ausführungsbeispiel der Erfindung mit über die Frequenz oder den Tastgrad der Halbbrücke geregelter Niederspannung,
- Fig.3: ein Ausführungsbeispiel der Erfindung mit über die Zwischenkreisspannung geregelter Niederspannung,
- Fig.4: ein Ausführungsbeispiel mit Zweiweggleichrichtung der Sekundärseite,
- Fig.5: ein Ausführungsbeispiel mit abweichender Kondensatorschaltung, und
- Fig.6: ein Ausführungsbeispiel mit induktiver Ausgangsfilterung.

Sofern im folgenden nichts anderes gesagt ist, gilt die folgende Beschreibung stets für alle Figuren.

Die Figuren zeigen eine elektrische Schaltungsanordnung 1 zur Erzeugung einer gleichgerichteten Niederspannung U_{nieder} kleiner elektrischer Spannung aus Netzwechselspannung U_{Netz}.

Diese Schaltungsanordnung besteht prinzipiell aus zwei miteinander kombinierten Schaltungsblöcken 2 bzw. 3. Beide Schaltungsblöcke sind miteinander so kombiniert, dass an der Verbindungsstelle zwischen erstem Schaltungsblock 2 und zweitem Schaltungsblock 3 eine in Spannung und Strom begrenzte Zwischenkreisspannung U_{Z} ansteht. Dabei stellt der Schaltungsblock 2 die in Spannung und Strom begrenzte Zwischenkreisspannung dem Schaltungsblock 3 zur Verfügung. Auf die Begrenzung wird später noch eingegangen.

Zu diesem Zweck wird der erste Schaltungsblock 2 mit der Netzspannung U_{Netz} beaufschlagt. Die Netzspannung U_{Netz} bewirkt im Eingangskondensator 4 einen Netzstrom, der dem Gleichrichter 5 aufgegeben und von diesem gleichgerichtet wird.

Die beiden Abgänge des Gleichrichters 5 sind über einen Ein-/Ausschalter 6 miteinander verbunden, der in Reihe mit einer Diode 7 liegt, welche in Richtung zum zweiten Schaltungsblock 3 durchlässig ist.

Parallel zu Ein-/Ausschalter und Diode 7 liegt der Bus-Kondensator 8, dem die Zwischenkreisspannung U_{Z} aufgeprägt wird. Bei dieser Schaltungsanordnung sind die beiden Abgänge des Gleichrichters 5 also einerseits über eine Diode 7 mit dem Bus-Kondensator 8 verbunden, andererseits aber auch mit dem Schalter 6, der die beiden Abgänge kurzschließen kann. Auf diese Weise kann der Eingangsstrom im Bus-Kondensator 8, der auch als Zwischenkreiskondensator bezeichnet werden kann, die Zwischenkreisspannung U_{Z} aufbauen, und wenn die Zwischenkreisspannung droht zu hoch zu werden, kann dieser Vorgang durch Einschalten des Schalters 6 unterbrochen werden. Wesentlich ist, dass die Zwischenkreisspannung U_{Z} spannungsbegrenzt ist und dass der erste Schaltungsblock 2 lediglich einen begrenzten Strom liefert.

Die Strombegrenzung wird im wesentlichen durch den Eingangskondensator 4 erreicht und die Spannungsbegrenzung durch den Ein-/Ausschalter 6. Dabei erfolgt die Spannungsbegrenzung durch eine geregelte Ansteuerung des Schalters 6, beispielhaft dargestellt durch die Regler 21 und 22. Es ist gezeigt, dass der Regler 21 bzw. 22 stets auch die Zwischenkreisspannung U_{Z} als Eingangswert hat, da diese sonst unzulässig hoch ansteigen könnte.

Am Bus-Kondensator 8 liegt die Zwischenkreisspannung U_{Z} an, die typisch im Bereich von etwa 50 Volt liegt, sofern die Netzspannung 100 bis 230 Volt beträgt.

Diese Schaltung basiert also auf der Überlegung, dass der Strom, der aus dem Gleichrichter 5 kommt, entweder in den Schalter 6 oder in den Zwischenkreiskondensator fließen kann. Schalter 6 und Zwischenkreiskondensator 8 sind somit parallel an den Gleichrichter 5 angeschlossen, wobei die Diode 7 der Entkopplung dient.

Die Zwischenkreisspannung U_{Z} beaufschlagt die im Wechseltakt betriebene Transistorhalbbrücke 19a,19b, an deren Halbbrückenpunkt 10 ein Primärkreis 11 ansetzt. Der Primärkreis 11 ist über den Kondensator 12 und eine nachfolgende optionale Vorschaltspule 13 in einen Transformatorkreis mit Transformatorprimärspule 14 eingebunden.

Der Wechseltakt wird der Transistorhalbbrücke 19a,19b über die Ansteuerung 20a aufgeprägt.

Auf der Sekundärseite ist eine korrespondierende Transformatorspule 16 in einen Sekundärkreis 15 integriert. Ferner ist eine Ausgangsdiode 17 mit Durchlassrichtung zu einem Abgriff der Niederspannung U_{nieder} vorgesehen. Hierzu parallel liegt die Kapazität 18 des Sekundärkreises 15.

Im wesentlichen besteht somit der zweite Schaltungsblock 3 aus einer asymmetrischen Halbbrücke mit einer Gleichrichtung im Ausgang. Es handelt sich hier im Prinzip um einen DC-DC Konverter, wobei zur Reduktion der DC-Eingangsspannung auf die Niederspannung U_{nieder} zwei über die Transformatorspulen 14 und 16 gekoppelte Kreise 11 und 15 vorgesehen sind.

Somit besteht der zweite Schaltungsblock neben der Halbbrückenschaltung, deren Ausgang über den Kondensator 12 an den Transformator angeschlossen ist, aus einer - hier im vorliegenden Fall - Einweggleichrichtung hinter der Sekundärwicklung des Transformators und einem Kondensator 18 zur kapazitiven Ausgangsfilterung. Der Kondensator 12 liegt in Reihe zum Transformator 14,16 und ist in diesem Ausführungsbeispiel als Gleichstrom-Entkopplungsglied zu betrachten, dessen Spannung sich während eines Zyklus nur unwesentlich ändert.

Jedoch sind auch Ausführungsformen möglich, bei denen sich die Spannung am Kondensator 12 während eines Zyklus stark ändert (Resonanzkonverter).

Die im Schaltplan eingezeichnete Vorschaltspule 13 ist normalerweise als Streuinduktivität des Transformators 14,16 realisiert.

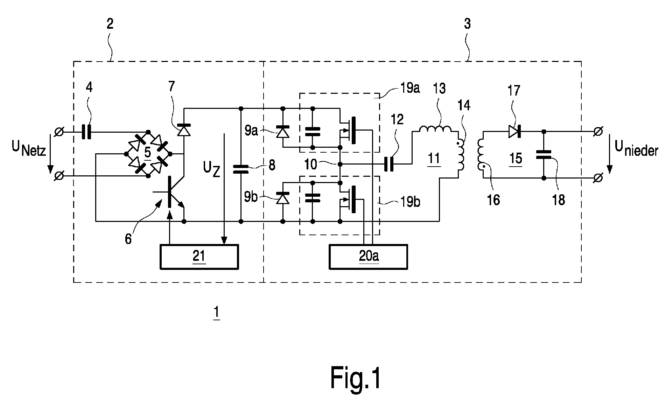

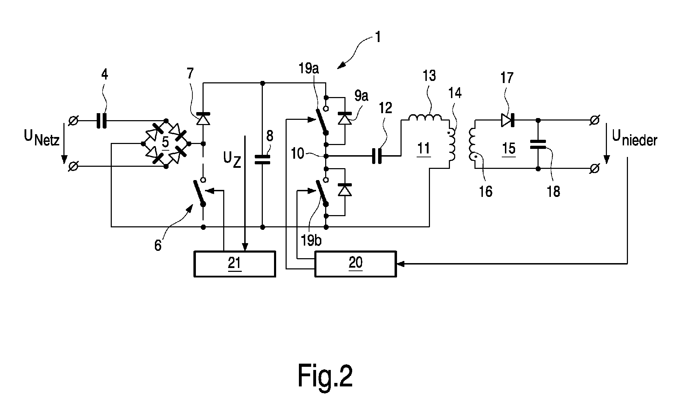

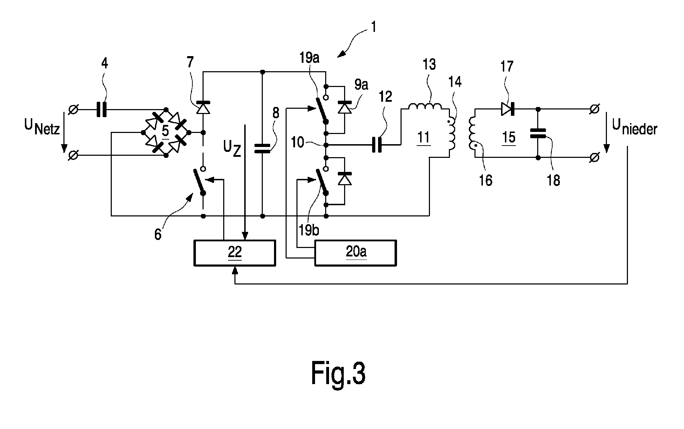

Im Fall der Fig.1 sind die Schalter durch elektronische Bauelemente realisiert. Fig.2 und Fig.3 zeigen allgemeine Schaltelemente. Wesentlich ist auch, dass das Tastverhältnis der im Wechseltakt betriebenen Schalter von 50 % abweichen kann. Speziell hier soll unter dem Tastverhältnis p das Verhältnis der Einschaltzeit t_{high} und der Dauer eines Schaltzyklus T verstanden werden, wobei t_{high} die Einschaltzeit des Transistors 19a ist.

Die elektrische Leistung wird hier nach dem Prinzip eines Durchflusswandlers zur Sekundärseite übertragen während der Ein-/Ausschalter 19b EIN ist.

Eine Besonderheit liegt in der Verwendung von MOSFET-Transistoren, da diese bereits die notwendigen Dioden 9a und 9b für die Diodenhalbbrücke enthalten.

Die Halbbrücke kann daher durch Verschaltung zweier MOSFET-Transistoren realisiert werden. Auch die Kapazitäten sind in den MOSFET-Transistoren bereits enthalten.

Eine wesentliche Eigenschaft dieser Bauform liegt in der Möglichkeit, die Transistoren spannungslos einzuschalten. Hierzu wird eine Verzögerung realisiert, welche nach dem Abschalten des einen Transistors eine Zeit vergehen lässt, bis der andere Transistor eingeschaltet wird. Während dieses Zeitraums lädt der durch die Streuinduktivität 13 fließende Strom im Transformator die drain-source-Kapazitäten der Halbbrückentransistoren so um, dass über dem Transistor, der als nächstes eingeschaltet werden soll, keine Spannung mehr anliegt. Es soll ausdrücklich erwähnt sein, dass die umzuladenden Kapazitäten sowohl die Drain-Source-Kapazitäten der Halbbrückentransistoren sein können als auch andere Kapazitäten der Halbbrückentransistoren. Sofern es sich als nötig erweisen sollte, können auch extern ein oder zwei Kondensatoren eingebaut werden.

Ein weiteres wesentliches Merkmal dieser Schaltungsanordnung ist die Potentialtrennung, die zwischen dem Primärkreis 11 und dem Sekundärkreis 15 vorgesehen ist. Der Transformator zwischen dem Primärkreis 11 und dem Sekundärkreis 15 dient daher im wesentlichen der Potentialtrennung.

Da die Zwischenkreisspannung bei etwa 50 Volt liegt, während die angestrebte Niederspannung bei etwa 5 Volt liegen wird, lassen sich einfache Transformatoren verwenden, die lediglich geringe Kosten verursachen. Trotzdem eignet sich die vorliegende Schaltung durch Verwendung entsprechender Transformatoren auch zur Erzeugung hoher Ausgangsspannungen.

Während Figur 1 ein Ausführungsbeispiel zeigt, bei welchem Änderungen der Niederspannung U_{nieder} nicht zur Regelung verwendet werden, zeigen die Ausführungsbeispiele gemäß der Figuren 2 und 3 Möglichkeiten, Änderungen der Niederspannung zur Regelung derselben zu verwenden. Es soll jedoch ausdrücklich darauf hingewiesen werden, dass beim Ausführungsbeispiel gemäß Fig.1 auch ein Regler 21 bzw. 22 zur Ansteuerung des Schalters 6 notwendig ist, wobei der Regler 21 bzw. 22 entsprechend den Ausführungsbeispielen der Figuren 2 und 3 über die Zwischenkreisspannung U_{Z} angesteuert wird. In jedem Falle jedoch muss der Regler 21 bzw. 22 immer auch die Zwischenkreisspannung U_{Z} als Eingangswert haben, um ein unzulässig hohes Ansteigen der Zwischenkreisspannung zu vermeiden.

Figur 2 zeigt ein Ausführungsbeispiel, bei welchem zur Regelung der Niederspannung U_{nieder} die Taktfrequenz oder das Tastverhältnis des Wechseltakts über einen Regler 20 erzeugt wird, dessen Eingangssignal am Ausgang des zweiten Schaltungsblocks 3 abgegriffen wird.

Zu diesem Zweck ist der Regler 20 mit dem Ausgang des zweiten Schaltungsblocks 3 verbunden und wirkt auf die beiden Schalter 19a und 19b, die im Wechseltakt geschaltet werden.

In Fig.2 wird die Zwischenkreisspannung U_{Z} über einen separaten Regler 21 geregelt, dessen Eingangssignal allein die Zwischenkreisspannung U_{Z} ist und dessen Ausgangssignal auf den Ein-/Ausschalter 6 wirkt.

Bei dieser Schaltungsanordnung ist davon auszugehen, dass die Zwischenkreisspannung U_{Z} ohne Rückkopplung aus dem zweiten Schaltungsblock im wesentlichen konstant gehalten wird, während die Ausgangsspannung U_{nieder} über einen entsprechenden Regelkreis des zweiten Schaltungsblocks auf einen konstanten Wert ausgeregelt wird. Der Regelkreis wirkt hier auf diejenigen Bauelemente des zweiten Schaltungsblocks 3, welche für das Tastverhältnis des Wechseltakts verantwortlich sind.

Zweckmäßigerweise handelt es sich bei dem Ein-/Ausschalter 6 um einen MOSFET-Transistor, dessen Ansteuerung mit dem Regler 21 verbunden ist.

Alternativ hierzu zeigt Fig.3 ein Ausführungsbeispiel der Erfindung, bei welchem das für den Wechseltakt verantwortliche Bauelement 20a kein Regler sondern eine Ansteuerung ist und deshalb nicht mit dem Ausgang der Schaltungsanordnung verbunden ist. Hier werden die Halbleiterschalter 19a und 19b unabhängig von der jeweils am Ausgang der Schaltung anstehenden Spannung angesteuert.
Bei diesem Ausführungsbeispiel der Erfindung wird allerdings das Ausgangssignal der Schaltungsanordnung abgegriffen und dem Regler 22 aufgeprägt, welcher die Zwischenkreisspannung U_{Z} durch Betätigung des elektrischen/elektronischen Schalters 6 ausregelt.

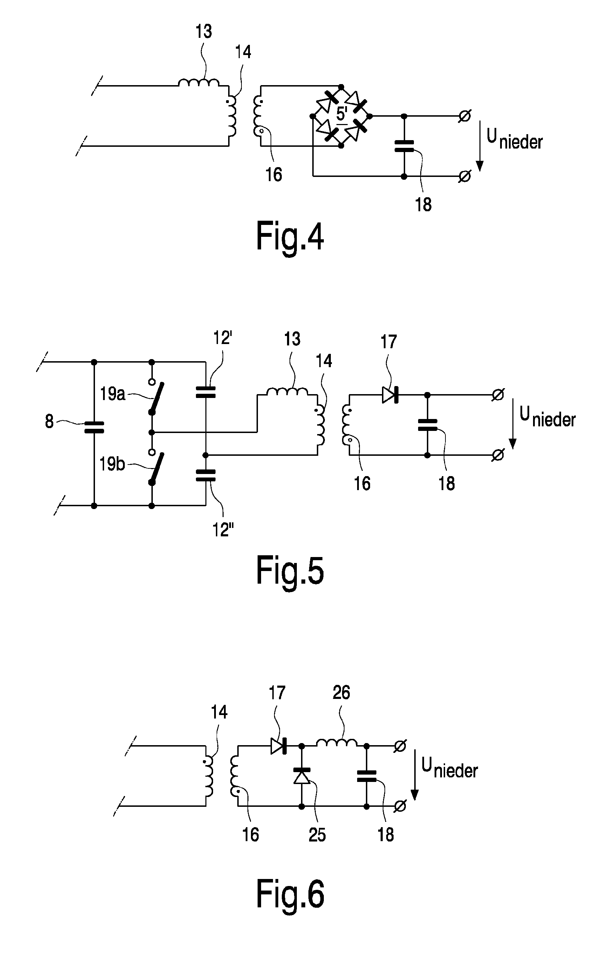

Weiterhin soll ausdrücklich erwähnt werden, dass lediglich eine einzige Ausgangsdiode 17 vorgesehen ist, da für die beabsichtigten Anwendungsfälle eine Einweggleichrichtung völlig ausreicht. Trotzdem kann selbstverständlich auch eine Zweiweggleichrichtung vorgesehen sein. Im Ausführungsbeispiel gemäß Fig.4 ist auf der Sekundärseite ein Zweiweggleichrichter 5' vorgesehen.

Ansonsten entspricht die Funktionsweise dieses Ausführungsbeispiel dem bisher gesagten.

Ergänzend hierzu zeigt Fig.5 ein Ausführungsbeispiel, bei welchem anstelle der ungleichsinnig gewickelten Transformatorenwicklungen ein Transformator mit gleichsinnig gewickelten Wicklungen verwendet wird.

Es soll ausdrücklich gesagt sein, dass die Erfindung auch bei derartigen Transformatoren angewendet werden kann, wobei Fig.5 zusätzlich ein Ausführungsbeispiel zeigt, bei welchem der Kondensator 12 zur Beseitigung des Gleichstromanteils entsprechend den Fig.2 und 3 in zwei Teilkondensatoren 12' und 12" aufgeteilt ist.

Dabei liegt der Halbbrückenpunkt 10 nach wie vor zwischen dem Schalter 19a und 19b während der Primärkreis 11, ausgehend vom Halbbrückenpunkt 10 mit seinem anderen Ende zwischen den beiden Teilkondensatoren 12' und 12" angeschlossen ist.

Ergänzend hierzu zeigt Fig.6 eine Weiterbildung, bei welcher in Reihe mit der Ausgangsdiode 17 die Induktivität 26 liegt und zusätzlich eine Diode 25 mit entgegengesetzter Polarität zwischen der Kathode der Ausgangsdiode 17 und dem gegenüberliegenden Ende der Sekundärspule 16 geschaltet ist.

In diesem Fall wird eine induktive Ausgangsfilterung realisiert.

Ein besonderer Vorteil der Erfindung liegt auch darin, dass auch separate Stand-By Versorgungen in Fernsehern, Videorekordern usw. realisierbar sind, deren Hauptnetzteile naturgemäß nicht die künftigen Normen zur begrenzten Leistungsaufnahme im Stand-By Betrieb erfüllen können.

### Bezugszeichenaufstellung

- 1: Schaltungsanordnung
- 2: erster Schaltungsblock
- 3: zweiter Schaltungsblock
- 4: Eingangskondensator
- 5: Gleichrichter
- 5': Zweiweggleichrichter im Ausgang
- 6: Ein-/Ausschalter
- 7: Diode
- 8: Bus-Kondensator
- 9a: erste Diode der Halbbrücke
- 9b: zweite Diode der Halbbrücke
- 10: Halbbrückenpunkt
- 11: Primärkreis
- 12: Kondensator zur Beseitigung des Gleichstromanteils
- 12': Teilkondensator zur Beseitigung des Gleichstromanteils
- 12": Teilkondensator zur Beseitigung des Gleichstromanteils
- 13: Vorschaltspule
- 14: Transformatorprimärspule
- 15: Sekundärkreis
- 16: Transformatorsekundärspule
- 17: Ausgangsdiode
- 18: Ausgangskapazität, Glättungskondensator
- 19a: erster Halbleiterschalter
- 19b: zweiter Halbleiterschalter
- 20: Regler(Wechseltakt)
- 20: Ansteuerung (Wechseltakt)
- 21: elektrische/elektronische Ansteuerung für 6
- 22: Regler(Zwischenkreisspannung)
- 25: Diode
- 26: Induktivität

## Patentansprüche

1. Elektrische Schaltungsanordnung (1) zur Erzeugung einer gleichgerichteten Niederspannung (U_{nieder}) kleiner elektrischer Leistung aus einer Wechselspannung (U_{Netz})
mit
1.1 zwei über einen Zwischenkreis miteinander kombinierten Schaltungsblöcken (2,3), von denen der erste Schaltungsblock (2) mit der Netzspannung (U_{Netz}) beaufschlagt wird und von denen am Ausgang des zweiten Schaltungsblocks (3) die Niederspannung (U_{nieder}) abgreifbar ist, wobei
1.2 im ersten Schaltungsblock (2) die Netzspannung (U_{Netz}) über einen Gleichrichter (5) gleichgerichtet und als über eine Spannungsbegrenzerschaltung (4,6,21,22) begrenzt und einem Bus-Kondensator (8) aufgeprägt wird, welcher
1.3 mit dem Eingang des zweiten Schaltungsblocks (3) verbunden ist, wo
1.4 die am Bus-Kondensator (8) anliegende Zwischenkreisspannung (U_{Z}) zum Betrieb einer bezüglich des zweiten Schaltungsblocks (3) im Wechseltakt betriebenen Halbbrücke (19a,19b) dient, an deren
1.5 Halbbrückenpunkt (10) ein Primärkreis (11) ansetzt, der potentialgetrennt mit einem
1.6 Sekundärkreis (15) zusammenwirkt, in welchem mindestens eine Ausgangsdiode (17) und vorzugsweise eine Ausgangsfilterung integriert ist und mit
1.7 einem Abgriff der Niederspannung (U_{nieder}) hinter der Ausgangsgleichrichtung (17) des Sekundärschwingkreises (15).

2. Elektrische Schaltungsanordnung nach Anspruch 1,
**dadurch gekennzeichnet,**
**dass** die Schalter (19a,19b) Halbleiterschalter sind.

3. Elektrische Schaltungsanordnung nach Anspruch 1 oder 2,
**dadurch gekennzeichnet,**
**dass** zwei Halbleiterschalter (19a,19b) vorgesehen sind, von denen jeder auch eine Diode (9a,9b) enthält.

4. Elektrische Schaltungsanordnung nach einem der Ansprüche 1 bis 3,
**dadurch gekennzeichnet,**
**dass** eine Potentialtrennung zwischen Primärkreis und Sekundärkreis vorgesehen ist.

5. Elektrische Schaltungsanordnung nach einem der Ansprüche 1 bis 4,
**dadurch gekennzeichnet,**
**dass** die Niederspannung (U_{nieder}) ungeregelt ist.

6. Elektrische Schaltungsanordnung nach einem der Ansprüche 1 bis 4,
**dadurch gekennzeichnet,**
**dass** die Niederspannung (U_{nieder}) geregelt ist.

7. Elektrische Schaltungsanordnung nach Anspruch 6,
**dadurch gekennzeichnet,**
**dass** zur Regelung der Niederspannung (U_{nieder}) und/oder das Tastverhältnis des Wechseltakts über einen Regler (20) erzeugt wird, dessen Eingangssignal am Ausgang des zweiten Schaltungsblocks abgegriffen wird.

8. Elektrische Schaltungsanordnung nach Anspruch 6 oder 7,
**dadurch gekennzeichnet,**
**dass** zur Regelung der Niederspannung (U_{nieder}) die Zwischenkreisspannung (U_{Z}) über einen elektrisch/elektronisch ansteuerbaren Schalter (6) geregelt wird, der den Eingangsstrom am Bus-Kondensator (8) vorbeileiten kann.

9. Elektrische Schaltungsanordnung nach Anspruch 8,
**dadurch gekennzeichnet,**
**dass** der elektrische/elektronische Schalter (6) zusätzlich zur Zwischenkreisspannung (U_{Z}) über einen Regler (22) von einem Signal beaufschlagt wird, welches am Ausgang des zweiten Schaltungsblocks (3) abgegriffen wird.

10. Elektrische Schaltungsanordnung nach einem der Ansprüche 1 bis 9,
**dadurch gekennzeichnet,**
**dass** lediglich eine einzige Ausgangsdiode (17) vorgesehen ist.

11. Elektrische Schaltungsanordnung nach einem der Ansprüche 1 bis 10,
**dadurch gekennzeichnet,**
**dass** eine kapazitive (18) Ausgangsfilterung vorgesehen ist.

12. Elektrische Schaltungsanordnung nach einem der Ansprüche 1 bis 10,
**dadurch gekennzeichnet,**
**dass** eine induktive (25,26) Ausgangsfilterung vorgesehen ist.

13. Elektrische Schaltungsanordnung nach einem der Ansprüche 1 bis 12,
**dadurch gekennzeichnet,**
**dass** die Vorschaltspule (13) als Streuinduktivität des Transformators (14, 16) ausgebildet ist.

14. Elektrische Schaltungsanordnung nach einem der Ansprüche 1 bis 13,
**dadurch gekennzeichnet,**
**dass** zwischen dem Halbbrückenpunkt (10) und dem Primärkreis (11) ein Kondensator (12) zur Beseitigung des Gleichstromanteils ist.

15. Elektrische Schaltungsanordnung nach einem der Ansprüche 1 bis 13,
**dadurch gekennzeichnet,**
**dass** das vom Halbbrückenpunkt (10) abgewendete Ende des Primärkreises (11) über jeweils einen Teilkondensator (12',12") mit den Enden der Halbbrücke (19a,19b) verbunden ist.

16. Elektrische Schaltungsanordnung nach einem der Ansprüche 1 bis 15,
**dadurch gekennzeichnet,**
**dass** ein Transformator mit ungleichsinnig angeschlossenen Wicklungen verwendet wird.

17. Elektrische Schaltungsanordnung nach einem der Ansprüche 1 bis 15,
**dadurch gekennzeichnet,**
**dass** ein Transformator mit gleichsinnig angeschlossenen Wicklungen verwendet wird.

18. Elektrische Schaltungsanordnung nach einem der Ansprüche 1 bis 17,
**dadurch gekennzeichnet,**
**dass** die Halbbrücke (19a,19b) asymmetrisch betrieben wird.

19. Elektrische Schaltungsanordnung nach einem der Ansprüche 1 bis 17,
**dadurch gekennzeichnet,**
**dass** die Halbbrücke (19a,19b) mit einem Tastverhältnis von 50 % betrieben wird.
